# EUROPÄISCHE PATENTSCHRIFT

(11) **EP 1 960 644 B1**
(45) Veröffentlichungstag und Bekanntmachung des Hinweises auf die Patenterteilung: **28.10.2009**
(21) Anmeldenummer: 06819892.8
(22) Anmeldetag: 01.12.2006
(51) Int. Cl.: F01N 11/00

(54) **VERFAHREN ZUR DIAGNOSE EINES IN EINEM ABGASBEREICH EINER BRENNKRAFTMASCHINE ANGEORDNETEN KATALYSATORS UND VORRICHTUNG ZUR DURCHFÜHRUNG DES VERFAHRENS**
METHOD FOR THE DIAGNOSIS OF A CATALYTIC CONVERTER WHICH IS ARRANGED IN AN EXHAUST AREA OF AN INTERNAL COMBUSTION ENGINE AND DEVICE FOR CARRYING OUT SAID METHOD
PROCEDE DE DIAGNOSTIC POUR UN CATALYSEUR SITUE DANS LA ZONE DES GAZ D'ECHAPPEMENT D'UN MOTEUR A COMBUSTION INTERNE ET DISPOSITIF PERMETTANT LA MISE EN OEUVRE DUDIT PROCEDE

(30) Priorität: 05.12.2005 DE 102005057957; 08.12.2005 DE 102005058524; 23.12.2005 DE 102005062116
(43) Veröffentlichungstag der Anmeldung: 27.08.2008
(73) Patentinhaber: ROBERT BOSCH GMBH, 70442 Stuttgart (DE)
(72) Erfinder: CLEMENT, Albrecht, 71665 Vaihingen (DE)
(86) Internationale Anmeldenummer: PCT/EP2006/069193
(87) Internationale Veröffentlichungsnummer: WO 2007/065855

(56) Entgegenhaltungen:
- DE-A1- 4 128 823
- DE-A1- 19 801 626
- US-A- 5 165 230

## Beschreibung

### Stand der Technik

Die Erfindung geht aus von einem Verfahren zur Diagnose (On-Board-Diagnose) eines in einem Abgasbereich einer Brennkraftmaschine angeordneten Katalysators und von einer Vorrichtung zur Durchführung des Verfahrens nach der Gattung der unabhängigen Ansprüche.

Die Erfindung betrifft weiterhin ein Steuergerätprogramm sowie ein Steuergerät-Programmprodukt.

Das Sauerstoff-Speichervermögen eines Katalysators wird dazu ausgenutzt, in Magerphasen des einer Brennkraftmaschine zugeführten Luft-Kraftstoff-Gemischs Sauerstoff aufzunehmen und in Fettphasen wieder abzugeben. Hierdurch wird erreicht, dass unerwünschte Abgaskomponenten effizient konvertiert werden können. Mit zunehmender Alterung des Katalysators nimmt das Sauerstoff-Speichervermögen ab. Hierdurch kann in den Fettphasen nicht mehr genügend Sauerstoff für Oxidationsreaktionen zur Verfügung gestellt werden.

Ein auf der Bewertung der Sauerstoff-Speicherfähigkeit eines Katalysators beruhendes Katalysator-Diagnoseverfahren ist in der Patentanmeldung DE 24 44 334 beschrieben. Der Brennkraftmaschine werden abwechselnd ein fettes Luft-Kraftstoff-Gemisch mit einem Lambda von 0,95 und ein mageres Luft-Kraftstoff-Gemisch mit einem Lambda von 1,05 zugeführt. Ein stromabwärts nach dem Katalysator angeordneter Sprung-Lambdasensor detektiert in einer Fettphase das Auftreten von Sauerstoffmangel und in einer Magerphase das Auftreten von Sauerstoffüberschuss. Das Signal des Stromabwärts-Sprung-Lambdasensors stoppt einen Zeitgeber, der von einem Signal gestartet wird, das ein stromaufwärts vor dem Katalysator angeordneter Sprung-Lambdasensor bereitstellt. Die Einstellung der Luftzahl Lambda in den Fett- und Magerphasen ist trotz der eingesetzten Sprung-Lambdasensoren, die eine genaue Erfassung nur eines um den Lambdawert 1 begrenzten Lambdabereichs ermöglichen, im Rahmen einer Lambdaregelung vorgesehen. Die vorgegebenen Abweichungen der Luftzahl Lambda vom Wert 1 für eine stöchiometrische Verbrennung sind derart festgelegt, dass die Kennlinien der beiden Sprung-Lambdasensoren gerade noch ausreichen, die Abweichungen vom Wert 1 wenigstens näherungsweise quantitativ zu erfassen. Voraussetzung für die Diagnose ist ein wenigstens näherungsweise konstanter Gasdurchsatz. Dieser wird dadurch sichergestellt, dass die Diagnose nur freigegeben wird, wenn ein bestimmtes, von einem Luftmengensensor und/oder Drosselklappen-Positionsgeber bereitgestelltes Signal vorliegt.

Das im DE-Patent 41 12 480 beschriebene Katalysator-Diagnoseverfahren, das ebenfalls auf der Bewertung der Sauerstoff-Speicherfähigkeit des Katalysators beruht, geht dadurch einen Schritt weiter, dass die dem Katalysator im Rahmen der Fett- und Magerphasen zugeführte Sauerstoffmenge quantitativ anhand der gemessenen Luftströmung und der stromaufwärts vor dem Katalysator mit einem Breitband-Lambdasensor gemessenen Luftzahl Lambda mit einer Integration berechnet wird.

Sofern stromaufwärts vor dem Katalysator ein Sprung-Lambdasensor (Zweipunkt-Lambdasensor) eingesetzt ist, kann der Sauerstoffgehalt des eingetragenen Abgases quantitativ nicht ohne weiteres ermittelt werden. Dies gilt sowohl für das fette Gemisch als auch für das magere Gemisch. Ein Ansatz für eine Ermittlung des Sauerstoffgehalts im Abgas geht von einer korrekten Vorsteuerung des der Brennkraftmaschine zugeführten Luft-Kraftstoff-Betriebsgemischs aus. Ein Vorsteuerfehler beeinflusst jedoch das Diagnoseergebnis erheblich.

Der Erfindung liegt die Aufgabe zugrunde, ein Verfahren zur Diagnose eines in einem Abgasbereich einer Brennkraftmaschine angeordneten Katalysators und eine Vorrichtung zur Durchführung des Verfahrens anzugeben, die eine hohe Genauigkeit bei der Ermittlung der Sauerstoff-Speicherfähigkeit des Katalysators erzielen.

### Offenbarung der Erfindung

Die Aufgabe wird durch die in den unabhängigen Ansprüchen angegebenen Merkmale jeweils gelöst.

Die erfindungsgemäße Vorgehensweise erhöht die Genauigkeit und die Zuverlässigkeit der Katalysatordiagnose dadurch, dass die Sauerstoff-Speicherfähigkeit des Katalysators, welche der Diagnose zugrunde liegen soll, mit hoher Zuverlässigkeit ermittelt werden kann.

Bei der Vorgabe eines Diagnosegemisch-Lambda-Soll-Signalverlaufs mit fetten und mageren Lambdawerten ist vorgesehen, dass der vorgegebene Diagnosegemisch-Lambda-Soll-Signalverlauf zumindest einen Abschnitt mit einer rampenförmigen Änderung enthält.

Die Vorgabe zumindest eines Abschnitts mit einer rampenförmigen Änderung anstelle von nur sprungförmigen Änderungen wird mit Blick auf einen kaum zu vermeidenden Vorsteuerfehler vorgenommen. Hierbei wird angenommen, dass bei unterschiedlichen Lambdawerten, die der Diagnosegemisch-Lambda-Soll-Signalverlauf aufweisen kann, ein mehr oder weniger großer unterschiedlicher Vorsteuerfehler auftritt. Durch die rampenförmige Änderung werden punktuelle Abweichungen oder Toleranzen der Vorsteuerung geglättet und wenigstens näherungsweise ein Mittelwert gebildet, um die Auswirkungen des Vorsteuerfehlers bei der Berechnung der Sauerstoff-Speicherfähigkeit des Katalysators, die ein Maß für die Güte des zu diagnostizierenden Katalysators ist, zu verringern.

Die rampenförmige Änderung kann in Richtung magere Lambdawerte und/oder in Richtung fettere Lambdawerte vorgesehen werden. Die rampenförmige Änderung ist als eine stetig zunehmende beziehungsweise stetig abnehmende Funktion zu verstehen.

Vorteilhafte Weiterbildungen und Ausgestaltungen der erfindungsgemäßen Vorgehensweise ergeben sich aus abhängigen Ansprüchen.

Eine Ausgestaltung sieht eine Vorgabe einer linearen rampenförmigen Änderung vor. Eine solche lineare Änderung kann einfach programmiert werden.

Eine andere Ausgestaltung sieht vor, dass ein erster Lambdasprung zum Erreichen eines Start-Lambdawerts zu Beginn der rampenförmigen Änderung vorgegeben wird. Vorzugsweise ist vorgesehen, dass ein magerer/fetter Maximal-Lambdawert vorgegeben wird, bei welchem der erste Lambdasprung beginnt. Zusätzlich oder alternativ ist ein Lambdasprung zum Verlassen eines End-Lambdawerts am Ende der rampenförmigen Änderung vorgesehen. Vorzugsweise ist auch hier die Vorgabe eines mageren/fetten Maximal-Lambdawerts vorgesehen, bei welchem der zweite Lambdasprung endet. Die wenigstens eine sprungförmige Änderung ermöglicht es, die Periodendauer der wenigstens einen Schwingung des Diagnosegemisch-Lambda-Soll-Signalverlaufs möglichst kurz zu erhalten. Insbesondere, wenn der Lambdasprung vom fetten/mageren Maximal-Lambdawert ausgeht beziehungsweise bei einem mageren/fetten Maximal-Lambdawert endet, kann die kürzestmöglicher Periodendauer der wenigstens einen Schwingung des Diagnosegemisch-Lambda-Soll-Signalverlaufs erhalten werden.

Eine Ausgestaltung sieht vor, dass der Lambda-1-Durchgang des Diagnosegemisch-Lambda-Ist-Signalverlaufs im zweiten Zeitbereich anhand eines gemessenen Stromaufwärts-Lambdasignals mit einer Zweipunkt-Charakteristik beziehungsweise Sprung-Charakteristik erfasst wird. Ein Lambdasensor, der ein solches Sensorsignal mit Zweipunkt-Charakteristik beziehungsweise Sprung-Charakteristik zur Verfügung stellt, ist besonders preiswert erhältlich. Dadurch ergeben sich erhebliche Einsparungen bei dem Serieneinsatz der erfindungsgemäßen Katalysatordiagnose.

Eine Ausgestaltung sieht die Ermittlung einer Abweichung zwischen dem Diagnosegemisch-Lambda-Ist-Signalverlauf und einem berechneten Diagnosegemisch-Lambda-Signalverlauf anhand der Zeitdifferenz vor, die zwischen dem Lambda-1-Durchgang des Diagnosegemisch-Lambda-Ist-Signalverlaufs und einem Lambda-1-Durchgang des berechneten Diagnosegemisch-Lambda-Signalverlaufs auftritt. Die ermittelte Zeitdifferenz wird zur Korrektur des vorgegebenen Diagnosegemisch-Lambda-Soll-Signalverlaufs oder zum Abbruch der Diagnose herangezogen.

Die erfindungsgemäße Vorrichtung zur Durchführung des Verfahrens betrifft zunächst eine Steuereinrichtung, welche zur Durchführung des Verfahrens speziell hergerichtet ist.

Die Steuereinrichtung enthält vorzugsweise wenigstens einen elektrischen Speicher, in welchem die Verfahrensschritte als Computerprogramm abgelegt sind.

Das erfindungsgemäße Computerprogramm sieht vor, dass alle Schritte des erfindungsgemäßen Verfahrens ausgeführt werden, wenn es auf einem Computer bzw. in der Steuereinrichtung abläuft.

Das Computerprogrammprodukt mit einem auf einem maschinenlesbaren Träger gespeicherten Programmcode führt das erfindungsgemäße Verfahren aus, wenn das Programm auf einem Computer bzw. in der Steuereinrichtung ausgeführt wird.

Weitere vorteilhafte Weiterbildungen und Ausgestaltungen der erfindungsgemäßen Vorgehensweise ergeben sich aus weiteren abhängigen Ansprüchen. Ausführungsbeispiele der Erfindung sind in der Zeichnung dargestellt und in der nachfolgenden Beschreibung näher erläutert.

Es zeigen:
- Figur 1: ein technisches Umfeld, in welchem ein erfindungsgemäßes Verfahren abläuft und
- Figur 2: Lambda-Signalverläufe in Abhängigkeit von der Zeit.

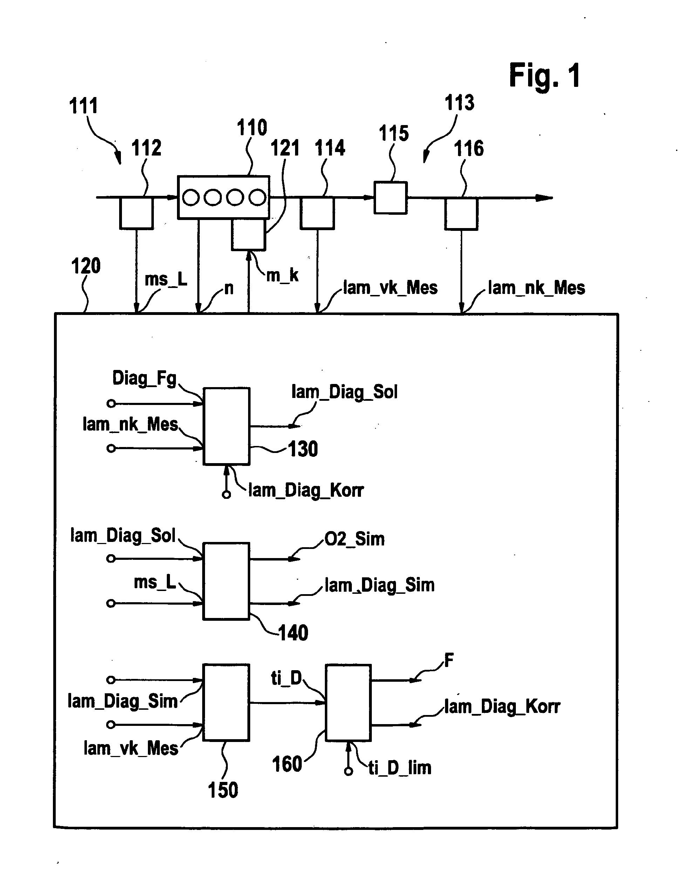

Figur 1 zeigt eine Brennkraftmaschine 110, in deren Ansaugbereich 111 eine Lufterfassung 112 und in deren Abgasbereich 113 ein Stromaufwärts-Lambdasensor 114, der stromaufwärts vor einem Katalysator 115 angeordnet ist, und ein Stromabwärts-Abgassensor 116, der stromabwärts nach dem Katalysator 115 angeordnet ist, vorgesehen sind.

Die Lufterfassung 112 stellt einem Steuergerät 120 ein Luftsignal ms_L, die Brennkraftmaschine 110 eine Drehzahl n, der Stromaufwärts-Lambdasensor 114 ein gemessenes Stromaufwärts-Lambdasignal lam_vK_Mes und der Stromabwärts-Lambdasensor 116 ein gemessenes Stromabwärts-Lambdasignal lam_nK_Mes zur Verfügung. Das Steuergerät 120 stellt einer KraftstoffZumessung 121 ein Kraftstoffsignal m_K zur Verfügung.

Die beiden Lambdasensoren 114, 116 sind vorzugsweise als preiswerte Sprung-Lambdasensoren realisiert, sodass die gemessenen Lambdasignale lam_vK_Mes, lam_nK_Mes Sprung-Charakteristik aufweisen. Die Lambdasensoren 114, 116 ermöglichen das Betreiben der Brennkraftmaschine 110 mit einem Luft-Kraftstoff-Gemisch, das auf einen Lambdawert im Bereich von Lambda = 1, beispielsweise im Bereich von Lambda = 0,995 und 1,005 mit hoher Genauigkeit geregelt werden kann.

Vorgesehen ist eine Diagnose des Katalysators 115, die auf einer Ermittlung zumindest eines Maßes für dessen Sauerstoff-Speicherfähigkeit beruht, die als Maß für die Alterung des Katalysators 115 herangezogen werden kann. Eine geringe Sauerstoff-Speicherfähigkeit bedeutet hierbei ein gealterter Katalysator 115.

Vorgesehen sein kann, dass die Diagnose nur durchgeführt wird, wenn wenigstens eine Betriebsgröße der Brennkraftmaschine 110 eine vorgegebene Bedingung erfüllt. Als Betriebsgröße kann beispielsweise die Drehzahl n oder eine Last der Brennkraftmaschine 110 herangezogen werden. Neben der Überprüfung, ob die wenigstens eine Betriebsgröße n einen Schwellenwert über- oder unterschreitet beziehungsweise in einem Bereich liegt, ist zweckmäßigerweise eine Überprüfung vorgesehen, ob der Differenzialquotient, der durch den Differenzenquotienten angenähert werden kann, unterhalb eines vorgegebenen Schwellenwerts liegt. Dadurch kann sichergestellt werden, dass die Brennkraftmaschine in einem zumindest näherungsweise stationären Betriebszustands betrieben wird. Die Diagnose wird freigegeben und durchgeführt, wenn ein Diagnose-Freigabesignal Diag_Fg vorliegt, das einer Kenngrößen-Festlegung 130 zur Verfügung gestellt wird.

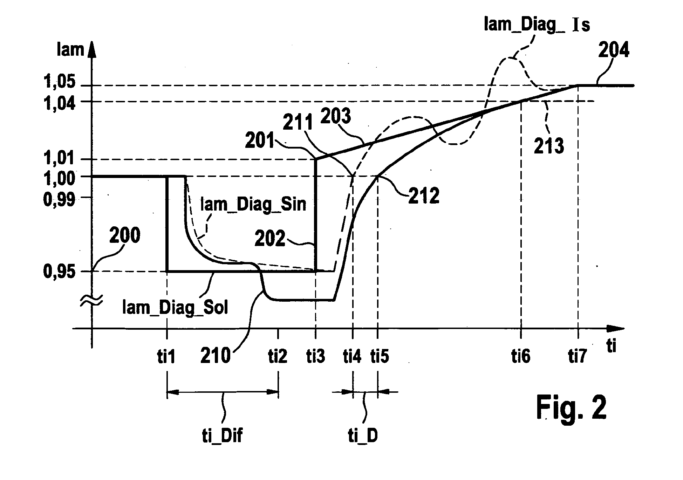

Vor einem in Figur 2 gezeigten ersten Zeitpunkt ti1 wird die Brennkraftmaschine 110 mit einem Luft-Kraftstoff-Betriebsgemisch betrieben, dessen Lambdawert auf beispielsweise Lambda = 1 wenigstens näherungsweise festgelegt ist.

Zum ersten Zeitpunkt ti1 tritt das Diagnose-Freigabesignal Diag_Fg auf. Die Kenngrößen-Festlegung 130 veranlasst zum ersten Zeitpunkt ti1 das Betreiben der Brennkraftmaschine 110 mit einem Diagnosegemisch, welches auf einen fetten Maximal-Lambdawert 200 von beispielsweise Lambda = 0,95 festgelegt wird. Die Änderung auf den fetten Maximal-Lambdawert 200 erfolgt vorzugsweise sprungförmig. Der gesamte zeitliche Verlauf des Lambdas des Diagnosegemischs ist in Figur 2 als Diagnosegemisch-Lambda-Soll-Signalverlauf lam_Diag_Sol eingetragen.

Zu einem dritten Zeitpunkt ti3 erfolgt die Umschaltung vom fetten Maximal-Lambdawert 200 auf einen Start-Lambdawert 201 von beispielsweise 0,99, wobei die Änderung vorzugsweise mit einem Lambdasprung 202 sprungförmig erfolgt.

Der dritte Zeitpunkt ti3 wird durch das vom Stromabwärts-Lambdasensor 116 bereitgestellte gemessene Stromabwärts-Lambdasignal lam_nK_Mes bestimmt, das der Kenngrößen-Festlegung 130 zur Verfügung steht. Die Umschaltung wird vorgenommen, wenn das gemessene, nicht dargestellte Stromabwärts-Lambdasignal lam_nK_Mes wenigstens näherungsweise einen Lambda-1-Durchgang aufweist, der den Durchbruch des Sauerstoffmangels stromabwärts nach dem Katalysator 115 signalisiert.

Nach dem dritten Zeitpunkt ti3 ist eine rampenförmige Änderung 203 des Diagnosegemisch-Lambda-Soll-Signalverlaufs lam_Diag_Sol vorgesehen. Die rampenförmige Änderung 203 erfolgt hierbei ausgehend vom Start-Lambdawert 201, und endet spätestens zu einem siebten Zeitpunkt ti7 mit Erreichen des mageren Maximal-Lambdawerts 204. Die rampenförmige Änderung 203 wird mit einer bestimmten Steigung vorgegeben, die beispielsweise in Abhängigkeit von der Sauerstoff-Speicherfähigkeit eines neuen Katalysators 115 festgelegt wird.

Im gezeichneten Ausführungsbeispiel wird davon ausgegangen, dass der Start-Lambdawert 201 im mageren Lambdabereich oberhalb vom Lambdawert = 1 liegt. Der Lambdasprung 202 kann ebenso bei einem Start-Lambdawert 201 liegen, der noch im fetten Lambdabereich, beispielsweise bei einem Lambdawert von 0,99 liegt.

Ebenso wird im gezeichneten Ausführungsbeispiel davon ausgegangen, dass der Lambdasprung 202 vom fetten Maximal-Lambdawert 200 von beispielsweise 0,95 ausgeht. Ebenso ist denkbar, dass der Lambdasprung 202 von einem im fetten Lambdabereich liegenden Lambdawert zwischen 0,95 und beispielsweise 0,99 ausgeht.

Entsprechende Ausgestaltungen sind bei einem Wechsel von einem mageren zu einem fetten Lambdawert möglich. Der Lambdasprung 202 geht in diesem Fall vom mageren Lambdabereich, vorzugsweise vom mageren Maximal-Lambdawert 204 aus. Der Lambdasprung 202 führt auf den Start-Lambdawert 201, der beispielsweise noch im mageren Lambdabereich oberhalb vom Lambdawert = 1,00 oder vorzugsweise bereits im fetten Lambdabereich unterhalb vom Lambdawert = 1,00 liegt.

Im gezeigten Ausführungsbeispiel wird davon ausgegangen, dass nach dem Start-Lambdawert 201 ausgehend vom fetten Lambdabereich die rampenförmige Änderung 203 zu einem noch mageren Lambdawert hin erfolgt. Gemäß einer Ausgestaltung kann vorgesehen sein, dass der Start-Lambdawert 201 höher liegt, im Extremfall dem mageren Maximal-Lambdawert 204 entspricht, und dass die rampenförmige Änderung 203 anschließend in Richtung fetterer Lambdawerte abfällt. Bei einem Wechsel vom fetten zum mageren Lambdabereich kann entsprechend vorgegangen werden, wobei dann die rampenförmige Änderung 203 von stärker fetten Lambdawerten hin zu weniger fetten Lambdawerten erfolgt.

Vorgesehen sein kann weiterhin, dass bei einem im fetten Lambdabereich liegenden Start-Lambdawert (201) die rampenförmige Änderung 203 sowohl in steigender als auch in fallender Richtung noch im fetten Lambdabereich endet. Entsprechend kann vorgesehen sein, dass bei einem im mageren Lambdabereich liegenden Start-Lambdawert 201 die rampenförmige Änderung 203 sowohl in steigender als auch in fallender Richtung noch im mageren Lambdabereich endet.

Im gezeigten Ausführungsbeispiel wird weiterhin davon ausgegangen, dass vor dem Lambdasprung 202 ein konstanter Lambdawert, im gezeichneten Ausführungsbeispiel der fette Maximal-Lambdawert 200, vorgelegen hat. Gemäß einer Ausgestaltung kann vorgesehen sein, dass jedem Lambdasprung 202 eine rampenförmige Änderung 203 folgt.

Ein weiterer, in Figur 2 nicht dargestellter Wechsel vom mageren zum fetten Lambdabereich nach dem siebten Zeitpunkt ti7 wird wieder in Abhängigkeit vom Stromabwärts-Lambdasensor 116 bereitgestellten gemessenen Stromabwärts-Lambdasignal lam_nK_Mes bestimmt. Die Umschaltung wird vorgenommen, wenn das gemessene Stromabwärts-Lambdasignal lam_nK_Mes wieder wenigstens näherungsweise einen Lambda-1-Durchgang aufweist, der den Durchbruch des Sauerstoffüberschusses stromabwärts nach dem Katalysator 115 signalisiert.

Die Sauerstoff-Speicherfähigkeit O2_Sim des Katalysators 115 kann in einer Kenngrößen-Berechnung 140 anhand eines Integrals ermittelt werden, welcher das Luftsignal ms_L und der Diagnosegemisch-Lambda-Soll-Signalverlauf lam_Diag_Sol zur Verfügung stehen. Die Integration wird beispielsweise über diejenige Zeitdauer durchgeführt, während welcher der Diagnosegemisch-Lambda-Soll-Signalverlauf lam_Diag_Sol den mageren Maximal-Lambdawert 204 von beispielsweise 1,05 aufweist. In diesem Fall liefert das Integral die im Katalysator 115 eingespeicherte Sauerstoffmenge.

Vorzugsweise erstreckt sich die Katalysatordiagnose über mehrere Perioden des Diagnosegemisch-Lambda-Soll-Signalverlaufs lam_Diag_Sol, um eine Mittelwertbildung der Berechnung der Sauerstoff-Speicherfähigkeit O2_Sim über mehrere Perioden durchführen zu können.

Zusätzlich oder alternativ kann auch die im Katalysator 115 gespeicherte Sauerstoffmenge O2_Sim anhand einer Integration über diejenige Zeitdauer erhalten werden, während welcher der Diagnosegemisch-Lambda-Soll-Signalverlauf lam_Diag_Sol den fetten Maximal-Lambdawert 200 von beispielsweise 0,95 aufweist.

Bei der Ermittlung des Diagnoseergebnisses wird vorausgesetzt, dass das Lambda des tatsächlich im Abgasbereich 113 auftretenden Diagnosegemisch-Lambda-Ist-Signalverlaufs lam_Diag_Is mit dem vorgegebenen Diagnosegemisch-Lambda-Soll-Signalverlauf lam_Diag_Sol - abgesehen von bekannten Signalverzögerungen durch Laufzeiten und abgesehen von Einschwingvorgängen - weitgehend übereinstimmt. Eventuell auftretende Abweichungen wirken sich unmittelbar auf das Diagnoseergebnis aus.

Im gezeigten Ausführungsbeispiel wird davon ausgegangen, dass zwischen dem ersten und dritten Zeitpunkt ti1, ti3 eine Abweichung 210 aufgetreten ist. Abweichungen 210 können durch Streuungen oder Drift von Komponenten in der Kraftstoff-Zumessung 121 auftreten. Abweichungen 210 können weiterhin beispielsweise durch eine Streuung oder Drift beziehungsweise einen Fehler in der Lufterfassung 112 auftreten. Die Abweichungen 210 können im Rahmen einer Adaption eines nicht näher gezeigten Lambdareglers gegebenenfalls nicht vollständig kompensiert werden.

In Figur 2 ist der sich einstellende Diagnosegemisch-Lambda-Ist-Signalverlauf lam_Diag_Is dargestellt, wobei beispielhaft davon ausgegangen wird, dass insbesondere im mageren Lambdabereich oberhalb von Lambda = 1,00 große Abweichungen zwischen dem Diagnosegemisch-Lambda-Ist-Signalverlauf lam_Diag_Is und dem Diagnosegemisch-Lambda-Soll-Signalverlauf lam_Diag_Sol auftreten. Ausgegangen wird hierbei nicht nur von einer Nichtlinearität, sondern auch von einer zeitlichen Abhängigkeit. Die erfindungsgemäß vorgesehene rampenförmige Änderung 203 sorgt für die Ansteuerung von unterschiedlichen Soll-Lambdawerten, bei denen gegebenenfalls unterschiedliche Fehler auftreten, wobei davon ausgegangen wird, dass durch die rampenförmige Änderung 203 punktuelle Abweichungen oder Toleranzen der Vorsteuerung geglättet und wenigstens näherungsweise eine Mittelwertbildung über die auftretenden Fehler stattfindet, so dass sich der Vorsteuerfehler zumindest im Mittel nur noch gering auf die Berechnung der Sauerstoff-Speicherfähigkeit 02_Sim des Katalysators 115 auswirkt.

Vorgesehen ist eine Zeitdifferenz-Ermittlung 150, welche eine Zeitdifferenz ti_D ermittelt, die zwischen einem Lambda-1-Durchgang 211 des Diagnosegemisch-Lambda-Ist-Signalverlaufs lam_Diag_Is und dem Lambda-1-Durchgang 212 eines von der Kenngrößen-Berechnung 140 berechneten Diagnosegemisch-Lambda-Signalverlaufs lam_Diag_Sim auftritt.

Der Lambda-1-Durchgang 211 des Diagnosegemisch-Lambda-Ist-Signalverlaufs lam_Diag_Is tritt zu einem vierten Zeitpunkt ti4 und der Lambda-1-Durchgang 212 des Diagnosegemisch-Lambda-Soll-Signalverlaufs lam_Diag_Sol tritt zu einem fünften Zeitpunkt ti5 auf.

Die zwischen dem vierten und fünften Zeitpunkt ti4, ti5 liegende Zeitdifferenz ti_D entspricht einem Maß für den Vorsteuerfehler. Eine geringe Zeitdifferenz ti_D entspricht einer guten Übereinstimmung zwischen dem Diagnosegemisch-Lambda-Ist-Signalverlauf lam_Diag_Is und dem berechneten Diagnosegemisch-Lambda-Signalverlauf lam_Diag_Sim. In diesem Fall kann die von der Kenngrößen-Berechnung 140 ermittelte Sauerstoff-Speicherfähigkeit O2_Sim als zuverlässig gelten und der Diagnose zugrunde gelegt werden. Eine größere Zeitdifferenz ti_D in positiver oder negativer Richtung deutet auf eine höhere Abweichung 210 hin, sodass die ermittelte Sauerstoff-Speicherfähigkeit O2_Sim voraussichtlich fehlerhaft ist und das Diagnoseergebnis entsprechend unzuverlässig ausfällt.

Die ermittelte Zeitdifferenz ti_D kann in einer Zeitdifferenz-Bewertung 160 dazu herangezogen werden, einen Diagnoselambda-Korrekturwert lam_Diag_Korr zu ermitteln, welcher der Kenngrößen-Festlegung 130 zur Verfügung gestellt wird. Die Kenngrößen-Festlegung 130 kann in Abhängigkeit vom Diagnoselambda-Korrekturwert lam_Diag_Korr den Diagnosegemisch-Lambda-Soll-Signalverlauf lam_Diag_Sol durch Anheben beziehungsweise Absenken mit dem Ziel beeinflussen, in den folgenden Perioden des Diagnosegemisch-Lambda-Soll-Signalverlaufs lam_Diag_Sol eine bessere Übereinstimmung zwischen dem gesteuerten Diagnosegemisch-Lambda-Soll-Signalverlauf lam_Diag_Sol und dem sich einstellenden Diagnosegemisch-Lambda-Ist-Signalverlauf zu erhalten. Zur Beeinflussung des Diagnosegemisch-Lambda-Soll-Signalverlaufs lam_Diag_Sol kann in das Kraftstoffsignal m_K oder in die Luftzuführung der Brennkraftmaschine 110 eingegriffen werden.

Die ermittelte Zeitdifferenz ti_D kann in der Zeitdifferenz-Bewertung 160 weiterhin dazu herangezogen werden, ein Fehlersignal F zu ermitteln. Hierzu wird die Zeitdifferenz ti_D mit einem vorgegebenen Zeitdifferenz-Schwellenwert ti_D_Lim verglichen. Wenn die Zeitdifferenz ti_D den Zeitdifferenz-Schwellenwert ti_D_Lim überschreitet, wird das Fehlersignal F ausgegeben, mit dem beispielsweise signalisiert werden kann, dass das Diagnoseergebnis voraussichtlich unzuverlässig ist oder mit welchem eine laufende Diagnose abgebrochen werden kann. Weiterhin kann das Fehlersignal F festlegen, dass ein bereits ermitteltes Diagnoseergebnis verworfen werden soll. Anstelle der ermittelten Zeitdifferenz ti_D kann auch eine Quotientenbildung von Zeitdifferenzen ti_D vorgesehen sein, die mit einem Quotienten-Schwellenwert verglichen werden, um gegebenenfalls das Fehlersignal F auszugeben.

In Figur 2 ist ein zweiter Zeitpunkt ti2 eingetragen, bei dem das vom Stromabwärts-Lambdasensor 116 bereitgestellte Stromabwärts-Lambdasignal lam_nK_Mes auftreten würde, wenn der Katalysator 115 ein geringeres Sauerstoff-Speichervermögen 02_Sim aufweisen würde als derjenige Katalysator 115, der dem Ausführungsbeispiel gemäß Figur 2 zugrunde gelegt ist, bei welchem der Sprung des Stromabwärts-Lambdasignals lam_nK_Mes zum dritten Zeitpunkt ti3 auftritt. Weiterhin soll der zweite Zeitpunkt ti2 einem Sauerstoff-Speichervermögen O2_Sim eines Grenz-Katalysators entsprechen, der die Anforderungen gerade noch erfüllt. Gemäß einer Ausgestaltung kann vorgesehen sein, dass bei einer Zeitdifferenz ti_Dif zwischen dem ersten Zeitpunkt ti1 und dem zweiten Zeitpunkt ti2, die einen bestimmten Schwellenwert unterschreitet, die Diagnose ohne weitere Berechnungen der Sauerstoff-Speicherfähigkeit O2_Sim des Katalysators 115 abgebrochen und der Katalysator 115 als ungenügend oder defekt bewertet wird.

In Figur 2 ist weiterhin ein sechster Zeitpunkt ti6 eingetragen, bei dem die Sauerstoff-Speicherfähigkeit O2_Sim des Katalysators 115 bereits einen Wert aufweist, der einem sehr guten Katalysator 115 entspricht. Prinzipiell könnte die Diagnose in diesem Fall bereits zum sechsten Zeitpunkt ti6 abgebrochen und der Katalysator 115 als sehr gut bewertet werden, ohne dass ein Sprung im Stromabwärts-Lambda-Messsignal lam_nK_Mes aufgetreten wäre. Die Weiterführung der Diagnose ermöglicht jedoch die Ermittlung der tatsächlichen Sauerstoff-Speicherfähigkeit O2_Sim des Katalysators 115. Es kann in diesem Fall jedoch zweckmäßig sein, die rampenförmige Änderung 203 des Diagnosegemisch-Lambda-Soll-Signalverlaufs lam_Diag_Sol nicht bis zum mageren Maximal-Lambdawert 204 fortzusetzen, sondern ab dem sechsten Zeitpunkt ti6 auf einen weniger mageren Begrenzungs-Lambdawert 213 begrenzen, um damit die im Abgasbereich 113 auftretende Sauerstoff-Konzentration nicht weiter ansteigen zu lassen.

Gemäß einer Ausgestaltung des Verfahrens kann vorgesehen sein, dass ein Diagnosegemisch-Lambda-Soll-Signalverlauf lam_Diag_Sol mit einem im fetten Lambdabereich liegenden Lambda vorgegeben wird, wenn die Brennkraftmaschine 10 zuvor in einer Betriebsphase mit Sauerstoffüberschuss betrieben wurde. Eine solche Betriebsphase ist beispielsweise eine Schubabschaltungsphase, in welcher die Kraftstoffzufuhr zur Brennkraftmaschine 10 vollständig unterbrochen ist. Das anschließende Betreiben der Brennkraftmaschine 10 im Rahmen eines fetten Diagnosegemisch-Lambda-Soll-Signalverlaufs lam_Diag_Sol ermöglicht das Ausräumen des Sauerstoffs aus dem Katalysator 116.

## Patentansprüche

1. Verfahren zur Diagnose eines in einem Abgasbereich (113) einer Brennkraftmaschine (110) angeordneten Katalysators (115), das auf einer Ermittlung der Sauerstoff-Speicherfähigkeit (O2_Sim) des Katalysators (115) beruht, die anhand eines in Abhängigkeit von einem gemessenen Stromabwärts-Lambdasignal (lam_nK_Mes) vorgegebenen Diagnosegemisch-Lambda-Soll-Signalverlauf (lam_Diag_Sol) mit fetten und mageren Lambdawerten ermittelt wird, **dadurch gekennzeichnet, dass** der vorgegebene Diagnosegemisch-Lambda-Soll-Signalverlauf (lam_Diag_Sol) zumindest einen Abschnitt mit einer rampenförmigen Änderung (203) enthält, dass ein Lambdasprung (202) zum Erreichen eines Start-Lambdawerts (201) zu Beginn der rampenförmigen Änderung (203) vorgegeben wird und dass die Sauerstoff-Speicherfähigkeit (O2_Sim) des Katalysators (115) anhand eines Integrals über einem Luftsignal (ms_L), welches die von der Brennkraftmaschine (110) angesaugte Luft widerspiegelt, und dem Diagnosegemisch-Lambda-Soll-Signalverlauf (lam_Diag_Sol) ermittelt wird.

2. Verfahren nach Anspruch 1, **dadurch gekennzeichnet, dass** eine lineare rampenförmige Änderung (203) vorgegeben wird.

3. Verfahren nach Anspruch 1, **dadurch gekennzeichnet, dass** ein magerer/fetter Maximal-Lambdawert (200, 204) vorgegeben wird, bei welchem der Lambdasprung (202) beginnt.

4. Verfahren nach Anspruch 1, **dadurch gekennzeichnet, dass** die rampenförmige Änderung (203) Lambda = 1 einschließt.

5. Verfahren nach Anspruch 1, **dadurch gekennzeichnet, dass** der Start-Lambdawert (201) bei einer rampenförmigen Änderung (203) in Richtung mageres Lambda im mageren Lambdabereich liegt.

6. Verfahren nach Anspruch 5, **dadurch gekennzeichnet, dass** bei einem im mageren Lambdabereich liegenden Start-Lambdawert (201) die rampenförmige Änderung (203) in steigender oder fallender Richtung noch im mageren Lambdabereich endet.

7. Verfahren nach Anspruch 1, **dadurch gekennzeichnet, dass** der Start-Lambdawert (201) bei einer rampenförmigen Änderung (203) in Richtung fettes Lambda im fetten Lambdabereich liegt.

8. Verfahren nach Anspruch 7, **dadurch gekennzeichnet, dass** bei einem im fetten Lambdabereich liegenden Start-Lambdawert (201) die rampenförmige Änderung (203) in steigender oder fallender Richtung noch im fetten Lambdabereich endet.

9. Verfahren nach Anspruch 1, **dadurch gekennzeichnet, dass** der vom Diagnosegemisch-Lambda-Soll-Signalverlauf (lam_Diag_Sol) vorgegebene Lambdawert auf einen Begrenzungs-Lambdawert (213) begrenzt wird, wenn die berechnete Sauerstoff-Speicherfähigkeit (O2_Sim) des Katalysators (115) einen Schwellenwert überschreitet.

10. Verfahren nach Anspruch 1, **dadurch gekennzeichnet, dass** die Diagnose abgebrochen wird, wenn die Zeitdifferenz (ti_Dif) zwischen zwei Lambdasprüngen des gemessenen Stromabwärts-Lambdasignals (lam_nK_Mes) einen Schwellenwert unterschreitet.

11. Verfahren nach Anspruch 1, **dadurch gekennzeichnet, dass** eine Abweichung (210) zwischen einem Diagnosegemisch-Lambda-Ist-Signalverlauf (lam_Diag_Is) und einem berechneten Diagnosegemisch-Lambda-Signalverlauf (lam_Diag_Sim) anhand derjenigen Zeitdifferenz (ti _D) ermittelt wird, die zwischen einem Lambda-1-Durchgang (211) des Diagnosegemisch-Lambda-Ist-Signalverlaufs (lam_Diag_Is) und einem Lambda-1-Durchgang (212) des berechneten Diagnosegemisch-Lambda-Signalverlaufs (lam_Diag_Sim) auftritt, und dass die Zeitdifferenz (ti_D) und/oder eine von wenigstens einer Zeitdifferenz (ti_D) abhängige Größe zur Korrektur des vorgegebenen Diagnosegemisch-Lambda-Soll-Signalverlaufs (lam_Diag_Sol) mit einem Diagnoselambda-Korrekturwert (lam_Diag_Korr) und/oder zum Abbruch der Diagnose herangezogen werden.

12. Verfahren nach Anspruch 1, **dadurch gekennzeichnet, dass** ein Diagnosegemisch-Lambda-Soll-Signalverlauf (lam_Diag_Sol) mit einem im fetten Lambdabereich liegenden Lambda vorgegeben wird nach einer Betriebsphase der Brennkraftmaschine (10) mit Sauerstoffüberschuss.

13. Verfahren nach Anspruch 12, **dadurch gekennzeichnet, dass** die Betriebsphase der Brennkraftmaschine (10) mit Sauerstoffüberschuss einer Schubabschaltungsphase entspricht.

14. Vorrichtung zur Diagnose eines in einem Abgasbereich (113) einer Brennkraftmaschine (110) angeordneten Katalysators (115), **dadurch gekennzeichnet, dass** zur Durchführung des Verfahrens nach einem der vorhergehenden Ansprüche ein speziell hergerichtetes Steuergerät (120) vorgesehen ist.

15. Vorrichtung nach Anspruch 14, **dadurch gekennzeichnet, dass** stromaufwärts vor dem Katalysator (115) ein Sprung-Lambdasensor (114) angeordnet ist.

16. Steuergerätprogramm, das alle Schritte eines Verfahrens nach einem der Ansprüche 1 bis 13 ausführt, wenn es in einem Steuergerät (120) abläuft.

17. Steuergerät-Programmprodukt mit einem auf einem maschinenlesbaren Träger gespeicherten Programmcode zur Durchführung des Verfahrens nach einem der Ansprüche 1 bis 13, wenn das Programm in einem Steuergerät (120) ausgeführt wird.

## Claims

1. Method for the diagnosis of a catalytic converter (115) which is arranged in an exhaust area (113) of an internal combustion engine (110), which method is based on the determination of the oxygen storage capability (O2_Sim) of the catalytic converter (115), which oxygen storage capability (O2_Sim) is determined on the basis of a diagnostic mixture lambda nominal signal profile (lam_Diag_Sol), which is predefined as a function of a measured downstream lambda signal (lam_nK_Mes), with rich and lean lambda values, **characterized in that** the predefined diagnostic mixture lambda nominal signal profile (lam_Diag_Sol) comprises at least one portion with a ramped change (203), **in that** a lambda step (202) to reach a start lambda value (201) at the start of the ramped change (203) is predefined, and **in that** the oxygen storage capability (02_Sim) of the catalytic converter (115) is determined on the basis of an integral using an air signal (ms_L), which reflects the air inducted by the internal combustion engine (110), and the diagnostic mixture lambda nominal signal profile (lam_Diag_Sol).

2. Method according to Claim 1, **characterized in that** a linear ramped change (203) is predefined.

3. Method according to Claim 1, **characterized in that** a lean/rich maximum lambda value (200, 204) at which the lambda step (202) begins is predefined.

4. Method according to Claim 1, **characterized in that** the ramped change (203) encompasses lambda = 1.

5. Method according to Claim 1, **characterized in that,** in the case of a ramped change (203) in the direction of lean lambda, the start lambda value (201) lies in the lean lambda range.

6. Method according to Claim 5, **characterized in that,** in the case of a start lambda value (201) which lies in the lean lambda range, the ramped change (203), whether rising or falling, still ends in the lean lambda range.

7. Method according to Claim 1, **characterized in that**, in the case of a ramped change (203) in the direction of rich lambda, the start lambda value (201) lies in the rich lambda range.

8. Method according to Claim 7, **characterized in that**, in the case of a start lambda value (201) which lies in the rich lambda range, the ramped change (203), whether rising or falling, still ends in the rich lambda range.

9. Method according to Claim 1, **characterized in that** the lambda value predefined by the diagnostic lambda nominal signal profile (lam_Diag_Sol) is limited to a limit lambda value (213) if the calculated oxygen storage capability (O2_Sim) of the catalytic converter (115) exceeds a threshold value.

10. Method according to Claim 1, **characterized in that** the diagnosis is ended if the time difference (ti_Dif) between two lambda steps of the measured downstream lambda signal (lam_nK_Mes) falls below a threshold value.

11. Method according to Claim 1, **characterized in that** a deviation (210) between a diagnostic mixture lambda actual signal profile (lam_Diag_Is) and a calculated diagnostic mixture lambda signal profile (lam_Diag_Sim) is determined on the basis of that time difference (ti_D) which occurs between a lambda 1 crossing (211) of the diagnostic mixture lambda actual signal profile (lam_Diag_Is) and a lambda 1 crossing (212) of the calculated diagnostic mixture lambda signal profile (lam_Diag_Sim), and **in that** the time difference (ti_D) and/or a variable which is dependent on at least one time difference (ti_D) is used to correct the predefined diagnostic mixture lambda nominal signal profile (lam_Diag_Sol) with a diagnostic lambda correction value (lam_Diag_Korr) and/or to end the diagnosis.

12. Method according to Claim 1, **characterized in that** a diagnostic mixture lambda nominal signal profile (lam_Diag_Sol) with a lambda in the rich lambda range is predefined after an operating phase of the internal combustion engine (10) with an excess of oxygen.

13. Method according to Claim 12, **characterized in that** the operating phase of the internal combustion engine (10) with an excess of oxygen corresponds to an overrun fuel cut-off phase.

14. Device for diagnosing a catalytic converter (115) which is arranged in an exhaust area (113) of an internal combustion engine (110), **characterized in that** a specially set-up control unit (120) is provided for carrying out the method according to one of the preceding claims.

15. Device according to Claim 14, **characterized in that** a step lambda sensor (114) is arranged upstream of the catalytic converter (115).

16. Control unit program which executes all the steps of a method according to one of Claims 1 to 13 when it runs in a control unit (120).

17. Control unit program product having a program code, stored on a machine-readable medium, for carrying out the method according to one of Claims 1 to 13 when the program is executed in a control unit (120).

## Revendications

1. Procédé de diagnostic pour un catalyseur (115) disposé dans une zone de gaz d'échappement (113) d'un moteur à combustion interne (110), qui se base sur une détermination de la capacité d'accumulation d'oxygène (O2_Sim) du catalyseur (115), qui est déterminée à l'aide d'une courbe de signal de consigne lambda de mélange de diagnostic prédéfinie (lam_Diag_Sol) en fonction d'un signal lambda aval mesuré (lam_nK_Mes) avec des valeurs lambda riches et pauvres, **caractérisé en ce que** la courbe de signal de consigne lambda de mélange de diagnostic prédéfinie (lam_Diag_Sol) contient au moins une portion avec une variation en forme de rampe (203), **en ce qu'**un saut de valeur lambda (202) est prédéfini pour atteindre une valeur lambda de démarrage (201) au début de la variation en forme de rampe (203) et **en ce que** la capacité d'accumulation d'oxygène (O2_Sim) du catalyseur (115) est déterminée à l'aide d'une intégrale par le biais d'un signal d'air (ms_L), qui reflète l'air aspiré par le moteur à combustion interne (110), et par le biais de la courbe de signal de consigne lambda de mélange de diagnostic prédéfinie (lam_Diag_Sol).

2. Procédé selon la revendication 1, **caractérisé en ce qu'**une variation en forme de rampe linéaire (203) est prédéfinie.

3. Procédé selon la revendication 1, **caractérisé en ce qu'**une valeur lambda maximale pauvre/riche (200, 204) est prédéfinie, à laquelle commence le saut de valeur lambda (202).

4. Procédé selon la revendication 1, **caractérisé en ce que** la variation en forme de rampe (203) inclut lambda = 1.

5. Procédé selon la revendication 1, **caractérisé en ce que** la valeur lambda de démarrage (201), dans le cas d'une variation en forme de rampe (203) dans la direction d'une valeur lambda pauvre, se situe dans la plage de valeurs lambda pauvres.

6. Procédé selon la revendication 5, **caractérisé en ce que** dans le cas d'une valeur lambda de démarrage (201) se trouvant dans la plage de valeurs lambda pauvres, la variation en forme de rampe (203) dans le sens d'une augmentation ou d'une diminution se termine encore dans la plage de valeurs lambda pauvres.

7. Procédé selon la revendication 1, **caractérisé en ce que** la valeur lambda de démarrage (201), dans le cas d'une variation en forme de rampe (203), dans le sens d'une valeur lambda riche, se trouve dans la plage de valeurs lambda riches.

8. Procédé selon la revendication 7, **caractérisé en ce que** dans le cas d'une valeur lambda de démarrage (201) se trouvant dans la plage de valeurs lambda riches, la variation en forme de rampe (203) dans le sens d'une augmentation ou d'une diminution se termine encore dans la plage de valeurs lambda riches.

9. Procédé selon la revendication 1, **caractérisé en ce \que** la valeur lambda prédéfinie par la courbe de signal de consigne lambda de mélange de diagnostic (lam_Diag_Sol) est limitée à une valeur lambda de limitation (213) si la capacité d'accumulation d'oxygène (O2_Sim) du catalyseur (115) dépasse une valeur seuil.

10. Procédé selon la revendication 1, **caractérisé en ce que** le diagnostic est interrompu si la différence de temps (ti_Dif) entre deux sauts de valeur lambda du signal lambda aval mesuré (lam_nK_Mes) est inférieure à une valeur seuil.

11. Procédé selon la revendication 1, **caractérisé en ce qu'**un écart (210) entre une courbe de signal instantanée lambda de mélange de diagnostic (lam_Diag_Is) et une courbe de signal lambda de mélange de diagnostic calculée (lam_Diag_Sim) est déterminée à l'aide de la différence de temps (ti_D) qui se produit entre un passage par lambda 1 (211) de la courbe de signal instantanée lambda de mélange de diagnostic (lam_Diag_Is) et un passage par lambda 1 (212) de la courbe de signal lambda de mélange de diagnostic calculée (lam_Diag_Sim), et **en ce que** la différence de temps (ti_D) et/ou une valeur dépendant d'au moins une différence de temps (ti_D) est utilisée pour la correction de la courbe de signal de consigne lambda de mélange de diagnostic prédéfinie (lam_Diag_Sol) avec une valeur de correction lambda de diagnostic (lam_Diag_Korr) et/ou pour interrompre le diagnostic.

12. Procédé selon la revendication 1, **caractérisé en ce qu'**une courbe de signal de consigne lambda de mélange de diagnostic (lam_Diag_Sol) avec une valeur lambda située dans la plage de valeurs lambda riches est prédéfinie après une phase de fonctionnement du moteur à combustion interne (10) avec un excès d'oxygène.

13. Procédé selon la revendication 12, **caractérisé en ce que** la phase de fonctionnement du moteur à combustion interne (10) avec un excès d'oxygène correspond à une phase de coupure d'injection en décélération.

14. Dispositif de diagnostic pour un catalyseur (115) disposé dans une zone de gaz d'échappement (113) d'un moteur à combustion interne (110), **caractérisé en ce que** pour la mise en oeuvre du procédé selon l'une quelconque des revendications précédentes, on prévoit un appareil de commande (120) prévu spécialement.

15. Dispositif selon la revendication 14, **caractérisé en ce que** l'on dispose un capteur lambda de saut (114) en amont du catalyseur (115).

16. Programme d'appareil de commande qui exécute toutes les étapes d'un procédé selon l'une quelconque des revendications 1 à 13, lorsqu'il se déroule dans un appareil de commande (120).

17. Produit de programme d'appareil de commande comprenant un code programme mémorisé sur un support lisible par machine, pour la mise en oeuvre du procédé selon l'une quelconque des revendications 1 à 13, lorsque le programme est exécuté dans un appareil de commande (120).
